# DEMANDE DE BREVET EUROPEEN

(11) **EP 1 000 997 A1**
(43) Date de publication de la demande: **17.05.2000**
(21) Numéro de dépôt: 99410157.4
(22) Date de dépôt: 08.11.1999
(51) Int. Cl.: C09K 11/02, H01J 9/227, H01J 29/28

(54) **Procédé d'encapsulation de luminophores**

(30) Priorité: 09.11.1998 FR 9814226
(71) Demandeur: PIXTECH SA, 13790 Rousset (FR)
(72) Inventeur: Valero, Rémi, 34000 Montpellier (FR)
(74) Mandataire: de Beaumont, Michel

(57) **Abrégé**

L'invention concerne un procédé de formation d'une couche d'oxyde de zinc ou d'indium à la surface de luminophores déposés par sérigraphie sur un substrat, comprenant les étapes consistant à ajouter les grains à une solution de liant de sérigraphie dans de l'eau, dissoudre dans la solution un nitrate de zinc ou d'indium, procéder au dépôt par sérigraphie, et recuire.

## Description

La présente invention concerne le dépôt de luminophores sur un substrat, par exemple une piste conductrice d'anode d'un écran plat.

Dans certains systèmes d'affichage, tels que les écrans plats à micropointes, il est prévu, du côté de l'anode, des couches ou pistes conductrices qui sont revêtues de luminophores, c'est-à-dire de grains d'un matériau qui émet un rayonnement lumineux quand il est soumis à un bombardement électronique.

Pour améliorer les propriétés des luminophores, et les propriétés d'ensemble de l'écran, notamment pour éviter des phénomènes de dégazage, il est souhaitable de recouvrir les couches de luminophores d'une couche de protection. Cette couche de protection doit être transparente aux électrons et au photons pour permettre le fonctionnement fondamental des luminophores. Elle doit servir de barrière aux ions pour éviter des dégazages des luminophores.

Plutôt que de déposer une couche uniforme à la surface de la couche de luminophores, on peut souhaiter enrober chaque luminophore. Ceci présente les avantages supplémentaires d'améliorer la liaison électrique entre les luminophores et la couche conductrice d'anode, et d'éviter les problèmes d'agglomération de luminophores lors du recuit.

Les procédés connus d'enrobage de luminophores sont des procédés complexes. On utilise par exemple une méthode Sol Gel avec comme précurseur de synthèse un alcoxide tel qu'un isopropoxide. L'inconvénient majeur de cette méthode est que l'on obtient des agrégats de taille importante, de plus de 10 µm de diamètre, ce qui est incompatible avec les procédés courants de fabrication d'un écran plat, en particulier avec le procédé de sérigraphie.

La présente invention vise à prévoir un nouveau procédé d'enrobage de luminophores réalisé dans le cadre d'un procédé de sérigraphie de luminophores, pratiquement sans modifier ce procédé de sérigraphie.

La présente invention vise plus particulièrement le cas où la couche d'enrobage des luminophores est une couche d'oxyde de zinc (ZnO) ou d'oxyde d'indium (In₂O₃).

On rappellera que, dans le cadre d'un procédé classique de dépôt par sérigraphie de grains d'un matériau luminophore sur une surface conductrice d'anode, on procède successivement aux étapes principales suivantes :
- préparation d'une solution, sensiblement à 10 % d'alcool de polyvinyle (PVA) dans de l'eau ;
- addition à ladite solution des luminophores ;
- sérigraphie proprement dite, c'est-à-dire que la pâte obtenue est appliquée à la raclette à travers une grille fine ;
- recuit.

On utilisera par exemple 8 g de luminophore dans 10 g de solution. De préférence, on ajoute également un anti-moussant tel que le produit commercialisé par les laboratoires Clariant sous l'appellation WLN. Le recuit est par exemple effectué à 450°C pendant 15 heures et a pour effet d'éliminer le PVA et de laisser en place seulement les luminophores, par exemple Gd₂O₂S:Tb (vert), Y₂SiO₅:Tb (vert), ZnO:Zn (vert), Y₂SiO₅:Ce (bleu), Y₂O₃:Eu (rouge). Comme on l'a indiqué précédemment, un inconvénient de ce procédé est que les conditions doivent être choisies de façon critique pour que les grains adhérent légèrement entre eux sans toutefois s'agglomérer complètement.

Par rapport à ce procédé connu, la présente invention prévoit uniquement la modification consistant à ajouter du nitrate d'indium ou du nitrate de zinc à la solution de PVA sous agitation magnétique. Le procédé de sérigraphie classique est ensuite exécuté et, à la fin de l'étape de recuit, on observe à la surface des luminophores, qui ont par exemple un diamètre de l'ordre de quelques µm un dépôt d'une couche de ZnO ou d'In₂O₃ d'une épaisseur de l'ordre de quelques nm.

L'épaisseur de la couche de ZnO ou d'In₂O₃ dépend notamment de la concentration de nitrate d'indium ou de zinc dans la solution de PVA. Par exemple, pour obtenir des épaisseurs variant entre 10 et 30 nm, on pourra utiliser une dissolution de 0,1 à 0,6 g de nitrate d'indium ou de nitrate de zinc dans 10 g de solution à 10 à 12 % de PVA.

La présente invention est susceptible de diverses variantes et modifications qui apparaîtront à l'homme de l'art. Au lieu de PVA, on pourra utiliser un autre liant utilisable en sérigraphie, par exemple du polyvinylpyrolidone (PVP). Les durées de recuit pourront être choisies selon la structure souhaitée du matériau encapsulant ; par exemple pour un recuit de deux à dix heures, on obtiendra un encapsulant amorphe, tandis que pour un recuit de dix à vingt heures, on obtiendra un encapsulant partiellement ou totalement cristallisé.

Selon un mode de réalisation de la présente invention, le luminophore est rajouté dans une proportion de 6 à 10 g pour 10 g de solution.

Selon un mode de réalisation de la présente invention, le recuit est poursuivi à une température de l'ordre de 400 à 500°C pendant plusieurs heures.

## Revendications

1. Procédé de formation d'une couche d'oxyde de zinc ou d'indium à la surface de luminophores déposés par sérigraphie sur un substrat, le dépôt par sérigraphie comprenant les étapes suivantes :
ajouter les grains à une solution de liant de sérigraphie dans de l'eau,
procéder au dépôt par sérigraphie,
recuire,
caractérisé en ce qu'il consiste à dissoudre au préalable dans ladite solution un nitrate de zinc ou d'indium.

2. Procédé selon la revendication 1, caractérisé en ce que le nitrate est dissous dans une proportion de 0,1 à 0,6 g pour 10 g de solution.

3. Procédé selon la revendication 1, caractérisé en ce que le luminophore est choisi dans le groupe comprenant Gd₂O₂S:Tb, Y₂SiO₅:Tb, Y₂SiO₅:Ce, Y₂O₃:Eu, ZnO:Zn.

4. Procédé selon la revendication 3, caractérisé en ce que le luminophore est rajouté dans une proportion de 6 à 10 g pour 10 g de solution.

5. Procédé selon la revendication 1, caractérisé en ce qu'un agent anti-moussant est ajouté à la solution.

6. Procédé selon la revendication 1, caractérisé en ce que le recuit est poursuivi à une température de l'ordre de 400 à 500°C pendant plusieurs heures.

7. Procédé selon la revendication 1, caractérisé en ce que le liant de sérigraphie est du PVA.
